# EUROPEAN PATENT APPLICATION

(11) **EP 4 822 960 A1**
(43) Date of publication of application: **14.10.2026**
(21) Application number: 26157100.4
(22) Date of filing: 06.02.2026
(51) Int. Cl.: H02K 7/108, H02K 7/118, F01D 19/00, F02C 7/277, F02C 7/268, H02K 7/11, H02K 7/00, H02K 7/12, H02K 1/18, H02K 7/18

(54) **ELECTRIC MACHINE COMPRISING A CLUTCH ASSEMBLY**

(30) Priority: 08.04.2025 US 202519173349
(71) Applicant: Unison Industries, LLC, Jacksonville, FL 32256 (US)
(72) Inventor: BADDAM, Nagendra, Jacksonville, 32256 (US); SINGH, Akshay, Jacksonville, 32256 (US); KAMBOJ, Surbhi, Jacksonville, 32256 (US); KAMPARAJU, Suresh Babu, Jacksonville, 32256 (US); DEVARAKONDA, Venkata Subramanya Sarma, Jacksonville, 32256 (US); DEV MAHADEVAIAH, Narendra, Jacksonville, 32256 (US)
(74) Representative: Openshaw & Co.

(57) **Abstract**

An electric machine (100) for a gas turbine engine (14) has a rotor (104), an electric machine drive shaft (108), a stator (102), and a clutch assembly (132). The rotor (104) has a rotor core that is rotatable about a rotational axis (110). The stator (102) has a stator core and a set of windings (128). The clutch assembly (132) has an engagement body (152), a set of clutch teeth (134), and a clutch plate (135). The engagement body (152) transfers a torque from the electric machine drive shaft (108) to an external drive shaft that is exterior the electric machine (100).

## Description

### TECHNICAL FIELD

The disclosure generally relates to an electric machine having a rotor and a stator, specifically to a clutch assembly for the electric machine.

### BACKGROUND

A turbine engine, for example a gas turbine engine, is typically started via an air turbine starter (ATS). The ATS is often mounted near the turbine engine and the ATS can be coupled to a high-pressure fluid source, such as compressed air, which impinges upon a turbine rotor in the ATS causing the turbine rotor to rotate at a relatively high rate of speed. The ATS includes an output shaft that is driven by the turbine rotor, typically through a reducing gearbox, where the output shaft provides rotational energy to a rotatable element of the turbine engine (e.g., the crankshaft or the rotatable shaft) to begin rotating. The rotation by the ATS continues until the turbine engine attains a self-sustaining operating rotational speed.

### BRIEF DESCRIPTION OF THE DRAWINGS

In the drawings:
FIG. 1 is a schematic illustration of a turbine engine with a hybrid turbine starter, in accordance with various aspects described herein.
FIG. 2 is a schematic cross-sectional view of the hybrid turbine starter of FIG. 1, further illustrating an electric machine having a clutch assembly in an engaged position in accordance with the various aspects described herein.
FIG. 3 is a schematic cross-sectional view of the hybrid turbine starter of FIG. 1, further illustrating the clutch assembly in a disengaged position in accordance with the various aspects described herein.
FIG. 4 is a schematic cross-sectional view of a portion of the clutch assembly of FIG. 2, further illustrating a bearing assembly and a clutch plate, the clutch plate having a non-rotating plate and a rotating plate of the clutch assembly in accordance various aspects described herein.
FIG. 5 is a schematic perspective view of a portion of the electric machine of FIG. 2, further illustrating a stator, a set of windings, and a set of clutch teeth in accordance various aspects described herein.
FIG. 6 is a schematic perspective view of a portion of the hybrid turbine starter of FIG. 2, further illustrating an engagement body of the clutch assembly and a turbine shaft in accordance various aspects described herein.
FIG. 7 is a schematic cross-sectional view of a portion of the electric machine as seen along section line VII-VII of FIG. 2, further illustrating a shaft lock in accordance with the various aspects described herein.
FIG. 8 is a schematic cross-sectional view of a section of an exemplary hybrid turbine starter suitable for use as the hybrid turbine starter of FIG. 1, further illustrating a clutch plate and a set of clutch teeth with a gap formed therebetween in accordance with the various aspects described herein.

### DETAILED DESCRIPTION

Aspects of this disclosure are related to an electric machine for a gas turbine engine. Specifically, to a hybrid turbine starter (HTS) including the electric machine. The HTS includes a turbine shaft. The electric machine includes a rotor, a stator, an electric machine drive shaft, and a clutch assembly. The stator comprises a set of windings forming a set of end windings. The clutch assembly comprises a clutch plate and a set of clutch teeth. The clutch plate is coupled to the electric machine drive shaft. The clutch plate is moveable between a first position and a second position. Movement of the clutch plate between the first position and the second position causes movement of the clutch assembly between a disengaged position and an engaged position, respectively. In the engaged position, a respective portion of the clutch assembly contacts the turbine shaft and transfers a torque from the electric machine drive shaft to an external drive shaft that is exterior the electric machine (e.g., the turbine shaft). In the disengaged position, the respective portion of the clutch assembly does not contact the turbine shaft.

The movement of the clutch plate between the first position and the second position, and hence the movement of the clutch assembly, between the disengaged position and the engaged position, respectively, is based on a magnetic flux generated by the set of windings. Specifically, when a threshold current flows through the set of windings (e.g., the electric machine is switched on), a threshold magnetic flux is reached which causes the clutch plate to move into the second position. When the threshold magnetic flux is not reached, the clutch plate moves into the first position. Basing the movement of the clutch plate, and hence the clutch assembly, on the generation of the magnetic flux reduces the complexity of the clutch assembly by eliminating the need for an exterior actuator (e.g., a motor) to move the clutch assembly between the engaged position and the disengaged position.

It is contemplated that the clutch assembly, as described herein, is integrated with the electric machine in such a way to utilize end winding leakage flux that would otherwise not be used. Due to the reluctance principle, the end winding leakage flux attracts the clutch assembly towards the rotor and stator, thus causing movement of the clutch assembly between the engaged position and the disengaged position.

While in some examples the disclosure is described in connection with gas turbine engines for an aircraft, this disclosure is applicable to other non-aircraft applications or other gas turbine engine environments. Non-limiting examples of where this disclosure can be applied include other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms such as "first", "second", etc. may be used interchangeably to distinguish one component from another and are not intended to signify location or importance of the individual components.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

Additionally, as used herein, the terms "radial" or "radially" refer to a direction away from a common center. For example, in the overall context of a turbine engine, radial refers to a direction along a ray extending between a center longitudinal axis of the engine and an outer engine circumference. Furthermore, as used herein, the term "set" or a "set" of elements can be any number of elements, including only one.

Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

As used herein, a "controller" or "controller module" can include a component configured or adapted to provide instruction, control, operation, or any form of communication for operable components to effect the operation thereof. A controller or controller module can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), a hardware-accelerated logic controller (e.g. for encoding, decoding, transcoding, etc.), the like, or a combination thereof. Non-limiting examples of a controller or controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller or controller module can also include a data storage component accessible by the processor, including memory, whether transient, volatile or non-transient, or non-volatile memory. Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein.

Additionally, as used herein, elements being "electrically connected," "electrically coupled," or "in signal communication" can include an electric transmission or signal being sent, received, or communicated to or from such connected or coupled elements. Furthermore, such electrical connections or couplings can include a wired or wireless connection, or a combination thereof.

As used herein, "hybrid turbine starter (HTS)" refers to an air turbine starter (ATS) having a turbine member selectively operably coupled to an electric machine. A housing, which can be several components coupled together, encases or surrounds at least a portion of the electric machine and the turbine member of the air turbine starter. The HTS can be a hybrid pneumatic electric starter (HPES), where the turbine member is driven by pressurized air (pneumatically) or by electrical energy.

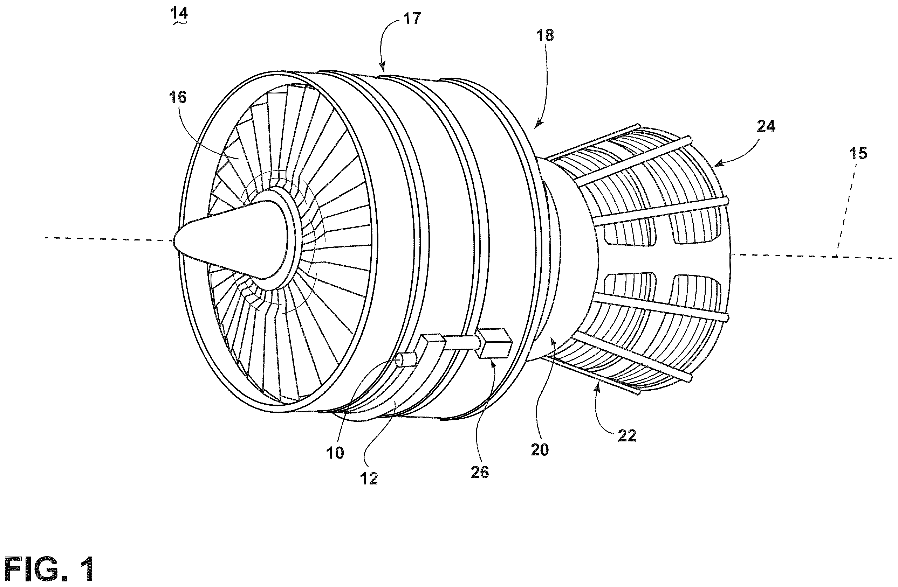

FIG. 1 is a schematic view of a gas turbine engine 14 having an air turbine starter (ATS) illustrated as the hybrid turbine starter 10 (HTS). The HTS 10 is coupled to an accessory gear box (AGB) 12, which are both schematically illustrated as being mounted to a gas turbine engine 14 such as a gas turbine engine. The gas turbine engine 14 defines an engine centerline 15 extending in an axial direction.

The gas turbine engine 14 includes an air intake with a fan 16 that supplies air to a high-pressure compression section 18. While illustrated by way of example at a radially outer portion of a fan casing 17, it is contemplated that the HTS 10 can couple to any portion of the gas turbine engine 14. By way of non-limiting example, the HTS 10 can be located radially inward if the fan casing 17 and/or shifted in an axial direction.

The air intake with the fan 16 and the high-pressure compression section 18 collectively are known as the "cold section" of the gas turbine engine 14 upstream of the combustion. The high-pressure compression section 18 provides a combustion section 20 with high-pressure air. In the combustion section 20, the high-pressure air is mixed with fuel and combusted. Hot and pressurized combustion gases pass through a high-pressure turbine section 22 and a low-pressure turbine section 24 before exhausting from the gas turbine engine 14. As the combustion gases pass through the high-pressure turbine section 22 and the low-pressure turbine section 24, rotational energy is extracted from the flow of the gases passing through the gas turbine engine 14. A shaft can connect the high-pressure turbine region 22 to the high-pressure compression section 18 to power the compression mechanism. The low-pressure turbine section 24 can be coupled to the fan 16 of the air intake by way of a shaft to power the fan 16. That is, the gas turbine engine 14 includes an engine core having a compression section 18, combustion section 20, and turbine sections 22, 24 in serial flow arrangement, the engine core having an engine drive shaft.

The AGB 12 is coupled to the gas turbine engine 14 at either the high-pressure turbine region 22 or the low-pressure turbine region 24. The coupling between the AGB 12 and the turbine engine can be, for example, by way of a mechanical power take-off 26. The mechanical power take-off 26 contains multiple gears and components for mechanical coupling of the AGB 12 to the gas turbine engine 14. Under normal operating conditions, the power take-off 26 translates power from the gas turbine engine 14 to the AGB 12 to power accessories of the aircraft for example but not limited to fuel pumps, electrical systems, and cabin environment controls. The HTS 10 can be mounted on the outside of either the air intake region containing the fan 16 or on the core near the high-pressure compression region 18.

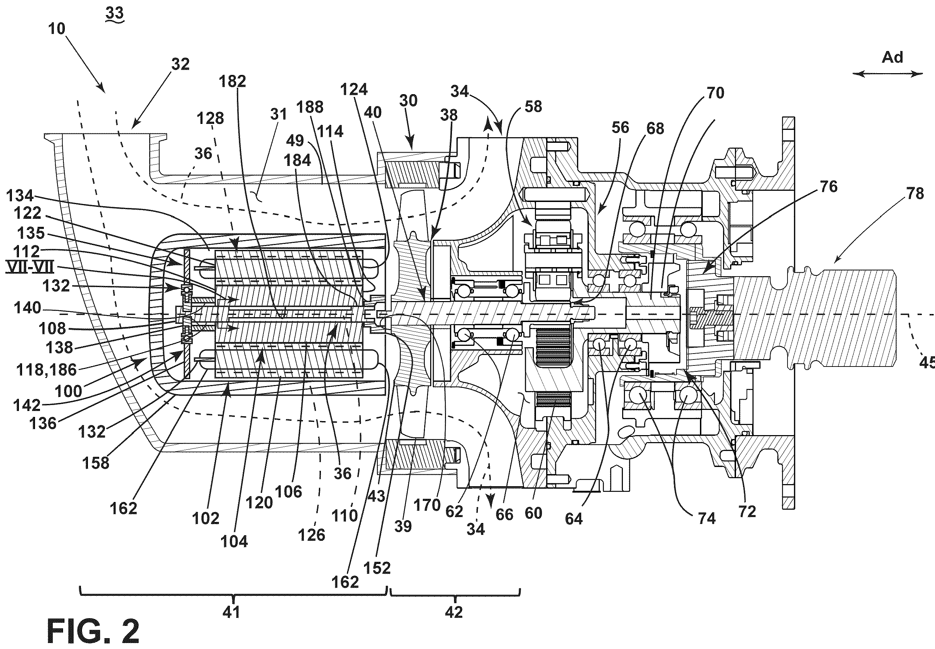

FIG. 2 is a schematic cross section of the HTS 10 of FIG. 1. The HTS 10 includes a housing 30 defining an interior 31 and an exterior 33. The housing 30 includes an inlet 32 and an outlet 34. A primary air flow path 36 extends between the inlet 32 and outlet 34 for communicating a flow of fluid therethrough. In one non-limiting example the fluid is air, such as pressurized air, which is provided from a pressurized air supply, including but not limited to, a ground-operating air cart, an auxiliary power unit, or a cross-bleed start from an engine already operating. The HTS 10 includes a turbine member 38 journaled within the housing 30. A plurality of blades 39 extend from and are circumferentially spaced about the turbine member 38. The plurality of blades 39 are disposed within the primary air flow path 36.

A turbine shaft 40 is coupled to the turbine member 38. The turbine shaft 40 can rotatably extract mechanical power from the flow of gas along the primary air flow path 36 via the plurality of blades 39, which thereby rotates the turbine shaft 40. The turbine shaft 40 is rotatable about an HTS rotational axis 45.

It is important to note that the HTS 10 is functionally and structurally different than the gas turbine engine 14 (FIG. 1). The HTS 10 is provided with a compressed air source to rotate the turbine member 38. The rotating of the turbine member 38 and turbine shaft 40 of the HTS 10 is used to start the gas turbine engine 14. Other than compressed air, the turbine member 38 can also be rotated by an electric machine 100 operably coupled and housed in the HTS 10 with the turbine shaft 40. The electric machine 100 will be described in further detail below. The gas turbine engine 14 further distinguishes from the HTS 10 as the gas turbine engine 14 uses the Brayton cycle (or Joule cycle), which involves intake, compression, combustion, and exhaust. The operating environment, requirements, structure, and function of the HTS 10 and the gas turbine engine 14 differ significantly.

The primary air flow path 36 has at least a first portion 41 and a second portion 42. The first portion 41 is defined from the inlet 32 to an upstream face 43 of the turbine member 38. The second portion 42 is defined from the upstream face 43 of the turbine member 38 to the outlet 34.

A gear train 58 can be located within a gear box 56 and drivingly coupled with the turbine member 38. In the illustrated example, the gear train 58 includes a ring gear 60. It will be understood that the gear train 58 can include any suitable gear assembly including, but not limited to, a planetary gear assembly, a pinion gear assembly, or the like. The rotatable turbine shaft 40 couples the gear train 58 to the plurality of blades 39 allowing for the transfer of mechanical power to the gear train 58. The rotatable turbine shaft 40 is coupled to the gear train 58 and rotatably supported by a pair of turbine bearings 62. The gear train 58 is supported by a pair of carrier bearings 64.

A gear box interior 66 can be provided for containing a lubricant, including, but not limited to, grease or oil. The gear box interior 66 can provide lubrication and cooling to mechanical parts contained therein, such as the gear train 58, ring gear 60, turbine bearings 62, carrier bearings 64, or the like.

An aperture 68 is provided in the gear box 56. The rotatable turbine shaft 40 can extend through the aperture 68 and mesh with a carrier shaft 70 to which a clutch 72 is mounted and supported by a pair of spaced bearings 74. A drive shaft 76 extends from the gear box 56 and is coupled to the clutch 72 and additionally supported by the pair of spaced bearings 74. The drive shaft 76 is driven by the gear train 58 and selectively couples to an output shaft 78 such that during a starting operation, the drive shaft 76 provides a driving motion to the output shaft 78.

The electric machine 100 includes a stator 102, a rotor 104, an electric machine drive shaft 108, and a clutch assembly 132. The electric machine 100 can be located within the housing 30. In the non-limiting example shown, the electric machine 100 is an electric motor. However, it is contemplated in a non-limiting example, that the electric machine 100 can include an electric generator.

The rotor 104 includes a rotor core 106. The rotor core 106 is rotatable about a rotational axis 110. The rotational axis 110 can be in-line with (e.g., parallel with and coincide with) the HTS rotational axis 45. Alternatively, the rotational axis 110 can be offset from, non-parallel with, or a combination thereof with the HTS rotational axis 45. The rotor 104 extends axially between a first rotor end 112 and a second rotor end 114, with respect to the rotational axis 110.

A shaft lock 116 is formed between the rotor core 106 and the electric machine drive shaft 108. The shaft lock 116 couples the rotor core 106 to the electric machine drive shaft 108. The shaft lock 116 is any suitable lock or coupling between the electric machine drive shaft 108 and the rotor core 106. As a non-limiting example, the shaft lock 116 can include a plurality of spline teeth 118 provided along the electric machine drive shaft 108.

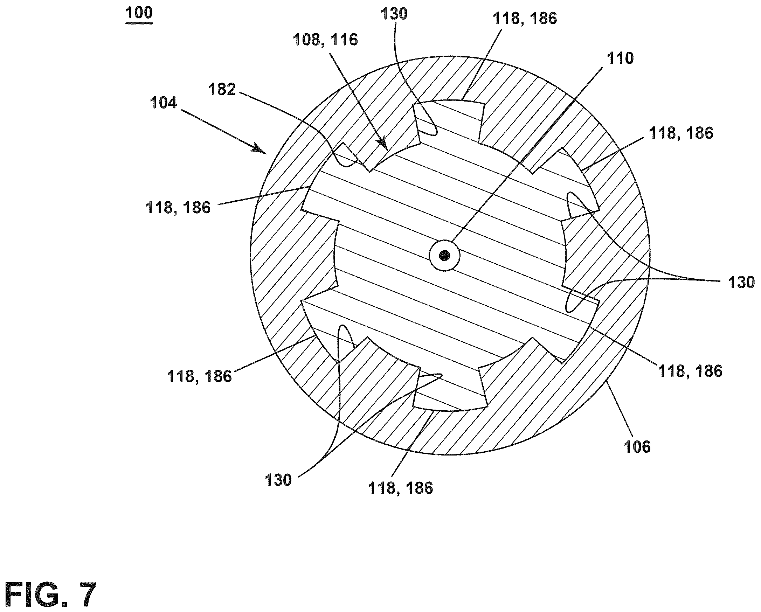

The plurality of spline teeth 118 can include a first set of spline teeth 184 and a second set of spline teeth 186. The first set of spline teeth 184 are axially rearwards of the second set of spline teeth 186, with respect to the rotational axis 110. The first set of spline teeth 184 can be defined as an axially rear set of spline teeth. The second set of spline teeth 186 can be defined as an axially forward set of spline teeth. The shaft lock 116 will be described in further detail with relation to FIG. 7.

The electric machine drive shaft 108 is driven by the rotor 104. The rotor 104 is rotatably connected with the electric machine drive shaft 108 through the shaft lock 116. The rotor 104 and the electric machine drive shaft 108 are configured to rotate relative to a stationary (i.e. non-rotating) stator 102. By way of non-limiting example, the rotor 104 can be an inner rotor.

The rotor 104, specifically the rotor core 106, includes a guide channel 182. The guide channel extends axially through at least a portion of the rotor core 106. As a non-limiting example, the guide channel 182 extends continuously between the first rotor end 112 and the second rotor end 114. The plurality of spline teeth 118 are received within the guide channel 182. The guide channel 182 and the plurality of spline teeth 118 collectively form the shaft lock 116. It is contemplated that at least a portion of the plurality of spline teeth 118 can move axially, with respect to the rotational axis 110, within the guide channel 182. The movement of the electric machine drive shaft 108 and the plurality of spline teeth 118 will be described in further detail in relation to FIG. 7.

The stator 102 comprises a stator core 120. The stator core 120 extends axially between a first stator end 122 and a second stator end 124 with respect to the rotational axis 110. The first stator end 122 and the first rotor end 112 define axially forward portions of the stator core 120 and the rotor core 106, respectively. The second stator end 124 and the second rotor end 114 define axially aft portions of the stator core 120 and the rotor core 106, respectively.

The stator 102 comprises a set of slots 126 illustrated in phantom lines. The set of slots 126 are circumferentially spaced, with respect to the rotational axis 110 along the stator core 120. Each slot of the set of slots 126 extends axially between the first stator end 122 and the second stator end 124, with respect to the rotational axis 110.

The stator 102 includes a set of windings 128, partially illustrated in phantom lines. The set of windings 128 extend through the set of slots 126 and axially outwardly from the first stator end 122 and the second stator end 124. The set of windings 128 include a set of end windings 162. Each end winding of the set of end windings 162 defines a portion of the set of windings 128 extending from a first slot of the set of slots 126 to a second slot of the set of slots 126. The second slot being circumferentially spaced from the first slot, with respect to the rotational axis 110.

The electric machine 100 includes an electric machine housing 158. The electric machine housing 158 at least partially defines at least a portion of the primary air flow path 36. In a non-limiting example, the electric machine housing 158 can guide air from the inlet 32 to the turbine member 38. That is, the electric machine housing 158 can create a smooth flow path around the electric machine 100.

The clutch assembly 132 includes clutch plate 135, a set of clutch teeth 134, and an engagement body 152. The clutch plate 135 is defined as a body extending radially from the electric machine drive shaft 108, with respect to the rotational axis 110. The clutch plate 135 can, for example, be formed as a circular disk. The clutch plate 135 forms a continuous annulus that extends about an entirety of a circumference of the rotational axis 110. Alternatively, at least a portion of the clutch plate 135 can be segmented about the rotational axis 110 such that the clutch plate 135 does not extend continuously about the entirety of the circumference of the rotational axis 110.

The clutch plate 135 can include a plurality of discrete bodies. As a non-limiting example, the clutch plate 135 can include a non-rotating plate 136 and a rotating plate 138. The non-rotating plate 136 and the rotating plate 138 each define an annulus extending circumferentially about the rotational axis 110. The non-rotating plate 136 and the rotating plate 138 can each be defined by a continuous, annular structure that extends continuously about an entirety of a circumference of the rotational axis 110. Alternatively, at least one of the non-rotating plate 136 or the rotating plate 138 can be segmented such that the non-rotating plate 136 or the rotating plate 138, respectively, does not extend continuously about an entirety of the circumference. As a non-limiting example, the non-rotating plate 136 can be segmented such that the non-rotating plate 136 only includes sections circumferentially corresponding circumferential locations of the set of clutch teeth 134. An interface or interaction between the set of clutch teeth 134 and the non-rotating plate 136 will be described in further detail below.

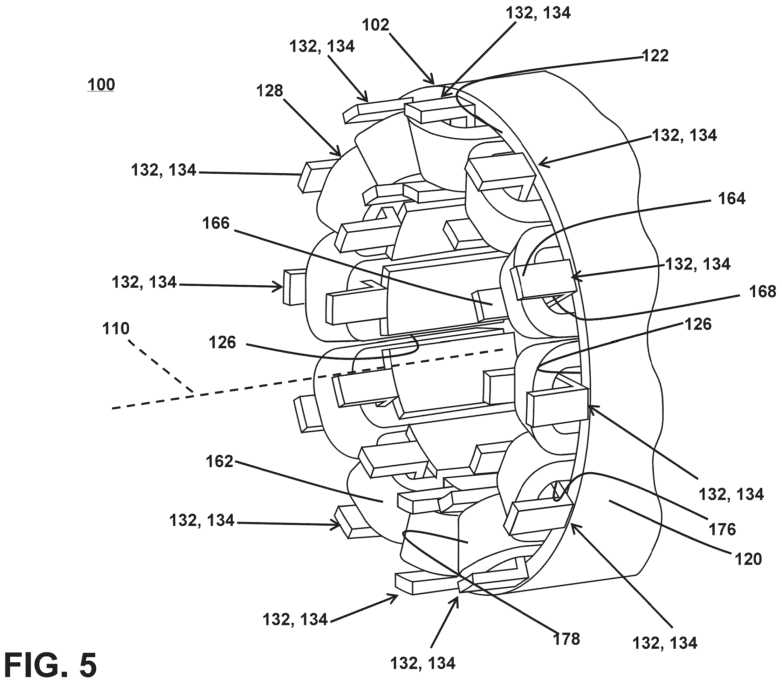

The set of clutch teeth 134 are provided along the first stator end 122. Specifically, the set of clutch teeth 134 extend axially from a portion of the first stator end 122, with respect to the rotational axis 110. A construction of the set of clutch teeth 134 will be described in further detail in relation to FIG. 5.

The clutch plate 135, specifically at least the non-rotating plate 136, includes a first ferrous material. The set of clutch teeth 134 include a second ferrous material. The first ferrous material can be the same as the second ferrous material. Alternatively, the first ferrous material can be different from the second ferrous material. It will be appreciated that the second ferrous material is an electromagnetic material. The first ferrous material and the second ferrous material can include, but is not limited to, steel, cast iron, wrought iron, stainless steel, or the like. As such, when a current is supplied to the set of windings 128, which will be described in further detail below, the second ferrous material is energized causing the first ferrous material to be attracted to the second ferrous material.

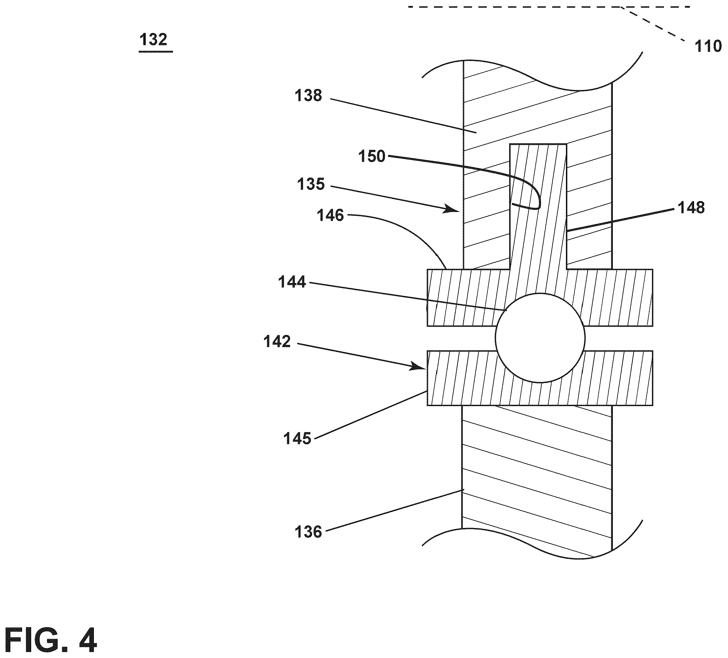

The clutch assembly 132 comprises a bearing assembly 142. A construction of the bearing assembly 142 will be described in further detail in relation to FIG. 4. The bearing assembly 142 couples the non-rotating plate 136 to the rotating plate 138. The bearing assembly 142 translates an axial movement of the non-rotating plate 136 to the rotating plate 138 with respect to the rotational axis 110. As such an axial movement of the non-rotating plate 136, with respect to the rotational axis 110, axially moves the rotating plate 138. The bearing assembly 142 rotationally isolates the non-rotating plate 136 from the rotating plate 138. As such, circumferential rotation of the rotating plate 138 about the rotational axis 110 does not cause the non-rotating plate 136 to rotate about the rotational axis 110.

The clutch assembly 132 comprises a biasing element 140. The biasing element 140 extends between a respective portion of the rotor 104 and the clutch plate 135. As a non-limiting example, the biasing element 140 extends between the first rotor end 112 and the rotating plate 138. The biasing element 140 is any suitable biasing element such as, but not limited to, a coil spring (e.g., a tension spring or a compression spring), a leaf spring, a torsion spring, or the like. As a non-limiting example, the biasing element 140 is a compression spring that biases the rotating plate 138 axially away from the first rotor end 112, with respect to the rotational axis 110. As illustrated, the biasing element 140 is in an unbiased position such that the biasing element 140 is neither pushing the clutch plate 135 axially away from or pulling the clutch plate 135 axially towards the rotor 104, with respect to the rotational axis 110.

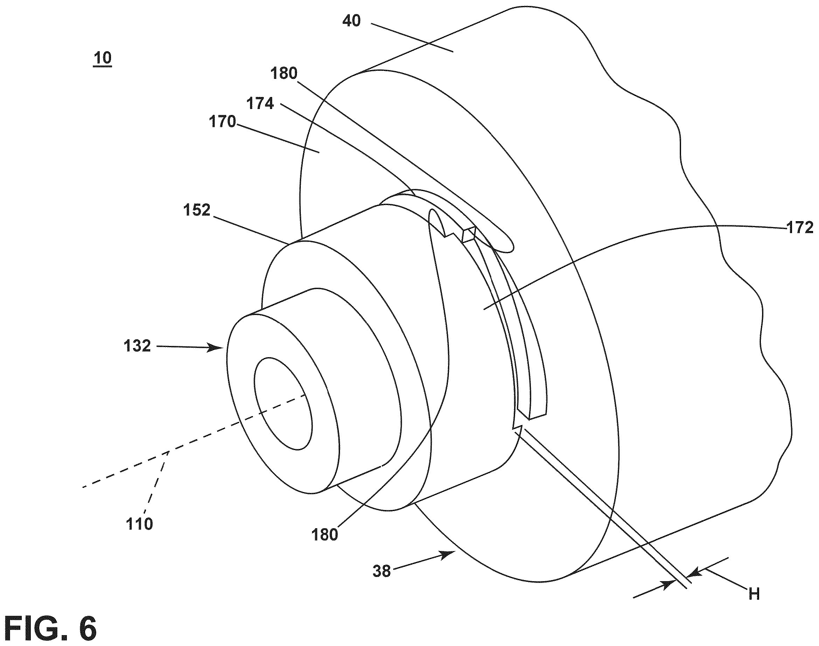

The engagement body 152 is defined as any suitable body or assembly configured to provide contact between and lock with a respective rotatable portion of the HTS 10 and the electric machine drive shaft 108. Specifically, the engagement body 152 is defined as a portion of the electric machine 100 that is configured to engage a respective portion of the turbine shaft 40. The interface between the turbine shaft 40 and the engagement body 152 will be described in further detail in relation to FIG. 6. The engagement body 152 is configured to contact or otherwise engage an engagement face 170 of the HTS 10. The engagement face 170 can be formed along a respective portion of the turbine shaft 40, the turbine member 38, or a combination thereof.

The clutch plate 135 is coupled to the electric machine drive shaft 108. Specifically, the rotating plate 138 is coupled to the electric machine drive shaft 108. Alternatively, the clutch plate 135 can be integrally formed with the electric machine drive shaft 108. The engagement body 152 is coupled to the electric machine drive shaft 108. As a non-limiting example, the electric machine drive shaft 108 and the engagement body 152 each include a threaded region 188. As such, the engagement body 152 can be threaded onto the electric machine drive shaft 108 at the threaded region 188. Alternatively, the engagement body 152 can be integrally formed with the electric machine drive shaft 108.

While described in terms of the engagement body 152 that is formed as a discrete body from the electric machine drive shaft 108, it will be appreciated that any suitable structure of body of the electric machine 100 can define the engagement body 152. As a non-limiting example, the electric machine drive shaft 108 itself can form the engagement body 152. The engagement body 152, as described herein, is generally defined as a rotational output of the electric machine 100. Specifically, the engagement body 152 is defined as a rotational output of torque form the electric machine 100. Put another way, the engagement body 152 is defined as a location along the electric machine 100 where the rotational movement (e.g., torque) of the electric machine drive shaft 108 is transferred to another portion of the HTS 10.

The electric machine 100 is axially forward of the turbine member 38. That is, the turbine member 38 is axially aft of the electric machine 100.

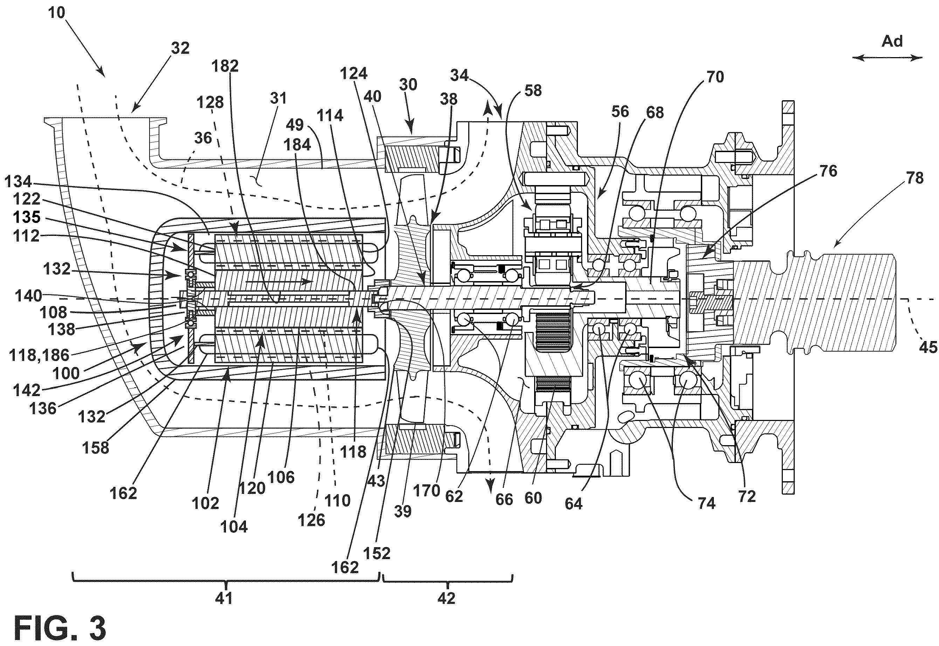

FIG. 3 is a schematic cross-sectional view of the HTS 10 of FIG. 1. The HTS 10 includes the housing 30 defining the interior 31 and the exterior 33. The housing 30 includes the inlet 32 and the outlet 34 with the primary air flow path 36 extending therebetween. The primary air flow path 36 has the first portion 41 and the second portion 42. The HTS 10 includes the turbine member 38, the plurality of blades 39, the turbine shaft 40, and the gear box 56. The turbine member 38 has the upstream face 43. The turbine shaft 40 has the engagement face 170 and is rotatable about the HTS rotational axis 45. The gear box 56 has the gear box interior 66 and includes the gear train 58 and the ring gear 60. The aperture 68 is formed in the gear box 56. The HTS 10 includes the turbine bearings 62, the carrier bearings 64, and the pair of spaced bearings 74. The HTS 10 includes the carrier shaft 70, the clutch 72, the drive shaft 76 and the output shaft 78.

The electric machine 100 has the stator 102, the rotor 104, and the electric machine drive shaft 108. The electric machine drive shaft 108 is rotatable about the rotational axis 110. The rotor 104 includes the rotor core 106 extending between the first rotor end 112 and the second rotor end 114. The shaft lock 116 can include the plurality of spline teeth 118 and the guide channel 182. The plurality of spline teeth 118 can include the first set of spline teeth 184 and the second set of spline teeth 186. The stator 102 comprises the stator core 120 extending between the first stator end 122 and the second stator end 124. The stator comprises the set of slots 126. The set of windings 128 having the set of end windings 162 are fed through the set of slots 126. The clutch assembly 132 comprises the set of clutch teeth 134, the clutch plate 135, the non-rotating plate 136, the rotating plate 138, the bearing assembly 142, the biasing element 140 and the engagement body 152. The electric machine drive shaft 108 can be coupled to the engagement body 152 through use of the threaded region 188.

With reference to FIGs. 2 and 3, during operation of the electric machine 100 electrical energy is supplied to the set of windings 128. The electrical energy within the set of windings 128 causes the set of windings to generate a magnetic field quantified by a magnetic flux. The magnetic flux generated by the set of windings 128 ultimately causes rotation of the rotor 104. Rotation of the rotor 104 causes rotation of the electric machine drive shaft 108. The electric machine 100 can receive electrical energy, for example, from a power distribution system or an electrical storage device (e.g., battery).

As previously mentioned, when the second ferrous material is energized, the first ferrous material is attracted to the second ferrous material. As such, when the magnetic flux is generated, the first ferrous material of the clutch plate 135 as well as the non-rotating plate 136 are attracted axially towards the set of clutch teeth 134.

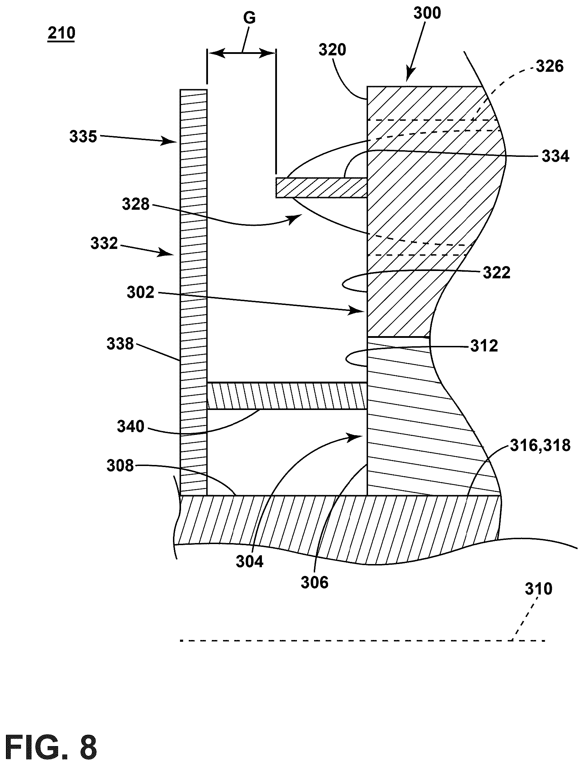

When the magnetic flux does not reach a threshold value (e.g., the magnetic flux is equal to or exceeding the threshold value), the clutch plate 135, specifically the non-rotating plate 136, remains in a first position (FIG. 2). In the first position, the clutch plate 135 does not contact the set of clutch teeth 134. Once the magnetic flux reaches or exceed the threshold value, a portion of the clutch plate 135 moves into a second position (FIG. 3). In the second position, the clutch plate 135, specifically the non-rotating plate 136, is axially closer to the set of clutch teeth 134, with respect to the rotational axis 110, than when in the first position. As a non-limiting example, the clutch plate 135, when in the second position, can directly contact the set of clutch teeth 134. Alternatively, the clutch plate 135 can be spaced from the set of clutch teeth 134 when in the second position; which will be described in further detail in relation to FIG. 8.

As discussed herein, the non-rotating plate 136 is coupled to the rotating plate 138 in such a way that rotational movement of the rotating plate 138 does not cause the non-rotating plate 136 to rotate. However, axial movement of the non-rotating plate 136 causes the rotating plate 138 to move axially with the non-rotating plate 136. As such, when the non-rotating plate 136 moves between the first position and the second position, the rotating plate 138 follows the non-rotating plate 136.

The axial movement of the clutch plate 135 causes the electric machine drive shaft 108 to move axially, with respect to the rotational axis 110. Specifically, the electric machine drive shaft 108 moves axially with the axial movement of the clutch plate 135 (based on whether or not the threshold value of the magnetic flux is reached). The electric machine drive shaft 108 moves axially within the guide channel 182, with respect to the rotational axis 110, based on the movement of the clutch plate 135. Specifically, the plurality of spline teeth 118 move axially within the guide channel 182. It is contemplated that the guide channel 182 is formed such that the plurality of spline teeth 118 are free to move axially within the guide channel 182 while remaining in contact with the rotor core 106 and allowing for a transfer of torque between the rotor core 106 and the electric machine drive shaft 108. The construction of the shaft lock 116 that allows for this transfer of torque will be described in further detail in relation to FIG. 7.

The axial movement of the electric machine drive shaft 108 causes an axial movement of the engagement body 152, with respect to the rotational axis 110. Put another way, the axial movement of the clutch plate 135 between the first position and the second position, ultimately causes the engagement body 152 to move axially with respect to the rotational axis 110. When the clutch plate 135 is in the first position (FIG. 2), the engagement body 152 does not come into contact with the engagement face 170. As such, the engagement body 152, and, therefore, the clutch assembly 130, is in a disengaged position when the clutch plate 135 is in the first position. When the clutch plate 135 is in the second position, the engagement body 152 contacts the engagement face 170. As such, the engagement body 152, and, therefore, the clutch assembly 130, is in an engaged position when the clutch plate 135 is in the second position.

When in the engaged position, the engagement body 170 transfers a torque from the electric machine drive shaft 108 to an external drive shaft from the electric machine 100 (e.g., the turbine shaft 40). When in the disengaged position, the engagement body 170 does not transfer a torque from the electric machine drive shaft 108 to the external drive shaft (e.g., the turbine shaft 40).

It will be appreciated that the biasing element 140 biases the clutch plate 135 towards the first position (FIG. 2) or otherwise away from the second position (FIG. 3). It will be appreciated that the first position is defined as the default position defined by when the biasing element 140 is in the unbiased position. The threshold value of the magnetic flux is at least partially selected as a function of a spring constant of the biasing element 140. When the threshold value of the magnetic flux is reached (e.g., the clutch plate 135 is in the second position of FIG. 3), the magnetic flux is large enough to overcome a force (defined by the spring constant of the biasing element 140) that the biasing element 140 applies to the clutch plate 135 axially away from the first rotor end 112. When the threshold value of the magnetic flux is not reached (e.g., the clutch plate 135 is in the first position of FIG. 2), the magnetic flux is not large enough to overcome the force that the biasing element 140 applies to the clutch plate 135. As such, the biasing element 140 pushes the clutch plate 135 axially away from the set of clutch teeth 134, with respect to the rotational axis 110.

Using a biasing element 140 with a relatively low spring constant means that a lower threshold value of the magnetic flux needs to be reached in order to move the non-rotating plate 136 into the second position. Conversely, using a biasing element 140 with a relatively high spring constant means that a higher threshold value of the magnetic flux needs to be reached in order to move the non-rotating plate 136 into the second position.

The clutch assembly 132 is moveable between the engaged position and the disengaged position without need for an external actuator (e.g., a motor), hereinafter referred to as an external clutch actuator. Instead, the clutch assembly 132 is moveable based on a function of the electric machine 100 itself. When the current is supplied to the set of windings 128 (e.g., the electric machine is turned on) and the threshold value of the magnetic flux is reached or exceeded, the clutch assembly 132 automatically moves into the engaged position. When the current is not supplied to the set of windings 128 (e.g., the electric machine is turned off) or otherwise the threshold value of the magnetic flux is not reached, the clutch assembly 130 remains in the default position (e.g., the first position).

The automatic movement of the clutch assembly 132 without the need for the external clutch actuator reduces a complexity of the clutch assembly 132 when compared to a conventional clutch assembly including the external clutch actuator. The reduction of the complexity of the clutch assembly 132, in turn, results in a lighter HTS 10 and a less complex manufacturing process of the HTS 10 when compared to an HTS having the conventional clutch assembly including the external clutch actuator.

The electric machine 100 can be used during various cycles of operation of the gas turbine engine 14 (FIG 1). Specifically, the HTS 10, specifically the electric machine 100, can be used during a startup process, a restart process, or a shutdown process of the gas turbine engine 14.

During the startup process, pressurized air is fed through the primary air flow path 36 causing rotation of the turbine member 38. Rotation of the turbine member 38 causes rotation of the turbine shaft 40, which ultimately causes rotation of the output shaft 78. Rotation of the output shaft 78 is used to begin rotation of various portions of the gas turbine engine 14 to enable a startup of the gas turbine engine 14. The electric machine 100 can be turned on (e.g., the current is supplied to the set of windings 128) such that the electric machine drive shaft 108 rotates about the rotational axis 110 and is engaged with the turbine shaft 40. As such, the torque generated by the electric machine 100 is transferred to the turbine shaft 40, and ultimately to the output shaft 78. The use of the electric machine 100 during the startup process increases a torque output from the output shaft 78, which in turn decreases a needed volume of pressurized air to be fed through the pressurized air flow path 36 in order to enable the startup of the gas turbine engine 14.

During the restart process, the electric machine 100 can be used without use of the pressurized air within the pressurized air flow path 36 to startup the gas turbine engine 14. As used herein, "restart" of the gas turbine engine 14 refers to an instance where the gas turbine engine 14 has ceased to drive the compression section 18 (FIG. 1), the high-pressure turbine region 22 (FIG. 1), the low-pressure turbine region 24 (FIG. 1), or a combination thereof through combustion of a fuel within the combustion section 20 (FIG. 1) and cannot do so without a restart or refiring of the gas turbine engine 14. The restart of the gas turbine engine 14, like during startup of the gas turbine engine 14, is done by providing a torque to the output shaft 78 causing rotation of various portions of the gas turbine engine 14. The difference, however, is that during startup of the gas turbine engine 14, the HTS 10 is coupled to a ground cart or other exterior air source that provides the pressurized air to the primary air flow path 36. During restart, however, the ground cart of the exterior air source are not available. As such, the electric machine 100 can be turned on to generate a torque on the output shaft 78 in order to restart the gas turbine engine 14.

During the shutdown process, the electric machine 100 can be used without use of the pressurized air within the pressurized air flow path 36. As used herein, the term "shutdown" refers to an intentionally ceasing of operations of the gas turbine engine 14. During the shutdown process, the gas turbine engine 14 winds down or otherwise the compression section 18, the high-pressure turbine region 22, and the low-pressure turbine region 24 decrease in rotational velocity. It is contemplated that creating a smooth, steady decrease in rotational velocity helps ensure that the gas turbine engine 14 is not damaged during the shutdown process. Specifically, creating the smooth, steady decrease in rotational velocity ensures that the rotating portions of the gas turbine engine 14 do not become bowed or disformed. The electric machine 100 is used during the shutdown process to provide a variable torque to the output shaft 78 and guide the rotational components of the gas turbine engine 14 along the smooth, steady decrease in rotational velocity.

It is contemplated that the electric machine 100 can be used during other functions of the gas turbine engine 14. As a non-limiting example, in some cases the electric machine 100 can be turned on to drive other components of the gas turbine engine 14 such as, but not limited to, a bleed air system. As a non-limiting example, the HTS 10 can be used during normal operation or shutdown of the gas turbine engine 14 to drive a bleed air (e.g., cooling fluid, ambient airflow) through the bleed air system to cool various portions of the gas turbine engine 14 that require cooling (e.g., the high-pressure turbine region 22, and the low-pressure turbine region 24).

While not illustrated, it will be appreciated that the HTS 10 can include or be coupled to a controller module having a processor and a memory. The memory includes a set of executable commands or runtime instructions, and the processor is configured to execute the executable commands or otherwise provide the runtime instructions to other portions of the HTS 10 or gas turbine engine 14. The controller module can be configured to automatically control the operation of the HTS 10 and the electric machine 100. As a non-limiting example, the controller module can be coupled to a sensor that determines a speed of one or more rotating components with the gas turbine engine 14. During shutdown, the controller module can read the sensor and automatically control the electric machine 100 to provide the needed torque to the output shaft 78 to create the smooth, steady decrease in rotational velocity as described herein.

FIG. 4 is a schematic cross-sectional view of a portion of the clutch assembly 132 of FIG. 2. The clutch assembly 132 includes the bearing assembly 142 interconnecting the non-rotating plate 136 and the rotating plate 138 of the clutch plate 135.

The bearing assembly 142 includes a set of bearings 144, a first bearing raceway 145, and a second bearing raceway 146. The set of bearings 144 can include various types of bearings such as, but not limited to, ball bearings, roller bearings, needle bearings, journal bearings, or the like. The first bearing raceway 145 opposes the second bearing raceway 146. The set of bearings 144 is located between and held in place by the first bearing raceway 145 and the second bearing raceway 146.

The first bearing raceway 145 is coupled to the non-rotating plate 136. Alternatively, the first bearing raceway 145 can be integrally formed with the non-rotating plate 136.

The second bearing raceway 146 is coupled to the rotating plate 138. As a non-limiting example, second bearing raceway 146 includes a key 148 and the rotating plate 138 includes a slot 150. The key 148 is received in the slot 150 to effectively couple the second bearing raceway 146 to the rotating plate 138. It is contemplated that the second bearing raceway 146 can be threaded into the rotating plate 138 through use of the key 148 and the slot 150. Alternatively, the second bearing raceway 146 can be integrally formed with the rotating plate 138.

As discussed herein, the use of the bearing assembly 142 rotationally isolates the non-rotating plate 136 from the rotating plate 138. As such, rotation of the rotating plate 138 about the rotational axis 110 does not cause rotation of the non-rotating plate 136 about the rotational axis 110. The bearing assembly 142 is constructed such that axial movement of the non-rotating plate 136, with respect to the rotational axis 110, causes axial movement of the rotating plate 138. As such, the rotating plate 138 moves axially with the non-rotating plate 136 between the first position (FIG. 2) and the second position (FIG. 3).

FIG. 5 is a schematic perspective view of a portion of the electric machine 100 of FIG. 2. The electric machine 100 comprises the stator 102 having the stator core 120 extending between the first stator end 122 and the second stator end 124 (FIG. 2). The electric machine 100 comprises the set of slots 126, and the set of windings 128 having the set of end windings 162. The electric machine 100 has the electric machine drive shaft 108 (FIG. 2) rotatable about the rotational axis 110. The clutch assembly 132 comprises the of clutch teeth 134.

Each end winding of the set of end windings 162 defines an opening 176. The opening 176 of each end winding of the set of end windings 162 is defined as a space or a void formed by a loop or turn in the set of windings 128 (e.g., the set of end windings 162).

Each clutch tooth of the set of clutch teeth 134 can include a first leg 164, a second leg 166 and a base 168. The first leg 164 and the second leg 166 extend from opposing ends of the base 168. The first leg 164, the second leg 166 and the base 168 collectively form a U-shaped profile of the clutch tooth.

The set of clutch teeth 134 are arranged such that the base 168 extends along a respective portion of the first stator end 122. The first leg 164 and the second leg 166 of each clutch tooth of the set of clutch teeth 134 extends axially away from the first stator end 122, with respect to the rotational axis 110. The base 168 of each tooth of the set of clutch teeth 134 extends through a respective portion of the opening 176 of a respective end winding of the set of end windings 162. The set of clutch teeth 134 are arranged such that the first leg 164 and the second leg 166 are located on radially opposing sides of a respective end winding (e.g., the end winding of the set of end windings 162 that the respective base extends through), with respect to the rotational axis 110.

Each end winding of the set of end windings 162 includes a distal end 178. The first leg 164 and the second leg 166 are sized to extend axially beyond the distal end 178 of a respective (e.g., nearest) end winding of the set of end windings 162, with respect to the rotational axis 110. Put another way, each clutch tooth of the set of clutch teeth 134 extends axially beyond the set of end windings 162 with respect to the rotational axis 110.

The set of clutch teeth 134 include any number of one or more clutch teeth. The set of slots 126 include any number of one or more slots. It will be appreciated that each clutch tooth of the set of clutch teeth 134 corresponds to a singular slot the set of slots 126. As such, a total number of clutch teeth of the set of clutch teeth 134 is equal to a total number of slots of the set of slots 126. Alternatively, two clutch teeth of the set of clutch teeth 134 can correspond to a singular slot of the set of slots 126. As such, the total number of clutch teeth of the set of clutch teeth 134 is greater than or equal to one-times and less than or equal to two-times the total number of slots of the set of slots 126. A ratio between the total number of clutch teeth of the set of clutch teeth 134 and the total number of slots of the set of slots 126 is dependent on a construction of the set of clutch teeth 134. As a non-limiting example, each clutch tooth for the set of clutch teeth 134 can have a U-shaped profile construction, which will be described in further detail below. As such, the total number of clutch teeth of the set of clutch teeth 134 is equal to the total number of slots of the set of slots 126 As a non-limiting example, at least one clutch tooth for the set of clutch teeth 134 can have a J-shaped profile or an L-shaped profile construction, which will be described in further detail below. As such, the total number of clutch teeth of the set of clutch teeth 134 can be greater than to the total number of slots of the set of slots 126.

The set of clutch teeth 134 are coupled to the stator core 120. As a non-limiting example, each clutch tooth of the set of clutch teeth 134 can be welded to, fastened to (e.g., through a fastener such as a screw), bolted to, adhered to, or otherwise coupled to a respective portion of the stator core 120. Alternatively, the set of clutch teeth 134 can be integrally formed with the stator core 120.

The geometric profile of the set of clutch teeth 134 (e.g., the u-shaped profile) provides for the conduit of the magnetic flux as discussed herein. Specifically, during operation of the electric machine 100, the magnetic flux is channel through the first leg 164, the second leg 166 and the base 168. The non-rotating plate 136 (FIG. 2), when in the first position, comes into contact with and rests against the axially distal ends of at least one of the first leg 164, the second leg 166, or a combination thereof. The axially distal ends of the first leg 164 and the second leg 166 refers to the portions of the first leg 164 and the second leg 166, respectively, that is furthest, axially with respect to the rotational axis 110, from the base 168.

While described in terms of having a U-shaped profile, it will be appreciated that each clutch tooth of the set of clutch teeth 134 can have various constructions. As a non-limiting example, at least one clutch tooth of the set of clutch teeth 134 can be formed with a C-shaped profile. As a non-limiting example, at least one clutch tooth of the set of clutch teeth 134 can be formed with a singular leg (e.g., one of only the first leg 164 or the second leg 166) and the base 168. The at least one clutch tooth then forms one of either a J-shaped profile or an L-shaped profile. Two clutch teeth of the set of clutch teeth 134 having the J-shaped profile or the L-shaped profile can be placed on radially opposing sides of an end winding of the set of windings 128 to collectively form a U-shaped profile, a C-shaped profile, or the like.

FIG. 6 is a schematic perspective view of a portion of the HTS 10 (FIG. 2). The HTS 10 includes the electric machine 100 (FIG. 2) having the clutch assembly 132. The clutch assembly 132 comprises the engagement body 152. The electric machine 100 comprises the electric machine drive shaft 108 (FIG. 2) rotatable about the rotational axis 110. The HTS 10 includes the turbine member 38 having the engagement face 170. As illustrated, the clutch assembly 132, specifically the engagement body 152, is in the disengaged position where the engagement body 152 is not in contact (or coupled) with the turbine member 38. As such, the transfer of torque from the electric machine drive shaft 108 to the turbine shaft 40 does not occur.

A first set of engagement teeth 172 extend from the engagement body 154. A second set of engagement teeth 174 extend from the engagement face 170. The first set of engagement teeth 172 are located along a portion of the engagement body 152 that corresponds to a location of where the second set of engagement teeth 174 are located along the engagement face 170. Put another way, the first set of engagement teeth 172 are radially aligned with the second set of engagement teeth 174, with respect to the rotational axis 11.

Each engagement tooth of the first set of engagement teeth 172 and the second set of engagement teeth 174 terminates circumferentially at a circumferential end 180, with respect to the rotational axis 110. Each engagement tooth of the first set of engagement teeth 172 and the second set of engagement teeth 174 takes any suitable geometric form. As a non-limiting example, the engagement teeth of the first set of engagement teeth 172 and the second set of engagement teeth 174 are formed as ramped surfaces that extend circumferentially about the rotational axis 110 to the circumferential end and have a non-constant axial height (H) from a respective portion of the engagement body 152 or the engagement face 170, respectively. A maximum axial height (H) for each tooth of the set of first set of engagement teeth 172 and the second set of engagement teeth 174 occurs at least at the circumferential end 180.

The first set of engagement teeth 172 are configured to catch a respective portion of the turbine shaft 40. Specifically, the first set of engagement teeth 172 are configured to catch the second set of engagement teeth 174. As used herein, the term "catch" refers to the act of a first body coming into and then remaining in contact with a second body. The first set of engagement teeth 172 oppose the second set of engagement teeth 174. As such, when in the engaged position (e.g., FIG. 2), the circumferential ends 180 of the first set of engagement teeth 172 contact and rest against the circumferential ends 180 of the second set of engagement teeth 174. The contact between the circumferential ends 180 of the first set of engagement teeth 172 and the second set of engagement teeth 174 effectively locks to the engagement body 152 in contact with the engagement face 170 (e.g., the turbine shaft 40).

The first set of engagement teeth 172 include any number of one or more engagement teeth circumferentially spaced along a respective portion of the engagement body 152, with respect to the rotational axis 110. The second set of engagement teeth 174 include any number of one or more engagement teeth circumferentially spaced along a respective portion of the engagement face 170, with respect to the rotational axis 110. A total number of engagement teeth of the first set of engagement teeth 172 is equal to a total number of engagement teeth of the second set of engagement teeth 174.

While the first set of engagement teeth 172 and the second set of engagement teeth 174 are described in terms of ramped teeth or surfaces, it will be appreciated that the first set of engagement teeth 172 and the second set of engagement teeth 174 can take various forms. As a non-limiting example, the first set of engagement teeth 172 and the second set of engagement teeth 174 can be formed as a plurality of stepped or rectangular teeth. As a non-limiting example, the first set of engagement teeth 172 and the second set of engagement teeth 174 can be defined by magnetic areas with opposing polarities of the engagement body 152 and the engagement face 170, respectively. As such, when the engagement body 152 moves axially towards the engagement face 170, the magnetic material of the engagement body 152 is attracted to the magnetic material of the engagement face 170, causing the engagement body 152 to be held in contact with the engagement face 170.

It will be appreciated that the first set of engagement teeth 172 and the second set of engagement teeth 174 are formed to mesh together when they come into contact. Put another way, the first set of engagement teeth 172 are formed to correspond to the second set of engagement teeth 174 such that when the first set of engagement teeth 172 come into contact with the second set of engagement teeth 174, rotation of the first set of engagement teeth 172 (e.g., through rotation of the electric machined drive shaft 108 of FIG. 2) cause rotation of the second set of engagement teeth 174 and the turbine shaft 40.

FIG. 7 is a schematic cross-sectional view of a portion of the electric machine 100 as seen along section line VII-VII of FIG. 2. The electric machine 100 comprises the rotor 104, and the electric machine drive shaft 108. The rotor 104 has the rotor core 106. The electric machine drive shaft 108 is rotatable about the rotational axis 110.

The shaft lock 116 interconnects the electric machine drive shaft 108 and the rotor 104. The shaft lock 116 can include the plurality of spline teeth 118. The plurality of spline teeth 118 include, for example, the second set of spline teeth 186. The plurality of spline teeth 118 define local radial protrusions extending from a respective body (e.g., the electric machine drive shaft 108 or the rotor core 106).

The plurality of spline teeth 118 are received within the guide channel 182. The guide channel 182 is formed to follow a contour of the plurality of spline teeth 118. Put another way, the plurality of spline teeth 118 are receivable within the guide channel 182 such that a periphery (e.g., outer surface) of the plurality of spline teeth 118 contacts the guide channel 182.

As discussed herein, the plurality of spline teeth 118 can move axially, with respect to the rotational axis 110, within the guide channel 182. As the plurality of spline teeth 118 directly contact the guide channel 182, when the rotor 104 rotates circumferentially about the rotational axis 110, a rotational torque of the rotor 104 is transferred to the electric machine drive shaft 108. Put another way, the plurality of spline teeth 118 are circumferentially constrained within the guide channel 182. As such, circumferential movement of the electric machine drive shaft 108 is dependent on circumferential movement of the rotor 104, about the rotational axis 110.

FIG. 8 is a schematic cross-sectional view of a section of an exemplary hybrid turbine starter 210 suitable for use as the hybrid turbine starter 10 of FIG. 1. The hybrid turbine starter 210 is similar to the hybrid turbine starter 10; therefore, like parts will be identified with like numerals increased by 200 with it being understood that the description of the hybrid turbine starter 10 applies to the hybrid turbine starter 210 unless noted otherwise.

The hybrid turbine starter 210 includes an electric machine 300. The electric machine 300 has a rotor 304, a stator 302, an electric machine drive shaft 308 and a clutch assembly 332. The stator 302 has a stator core 320 terminating at a stator end 322 (e.g., the first stator end 122 of FIG. 2). The stator 302 comprises a set of windings 328 received within a set of slots 326. The rotor 304 has a rotor core 306 terminating at a rotor end 312 (e.g., the first rotor end 214 of FIG. 2). The electric machine drive shaft 308 is rotatable about a rotational axis 310.

The clutch assembly 332 comprises a clutch plate 335, a set of clutch teeth 334, and a biasing element 340. The clutch assembly 332 comprises a shaft lock 316 including a set of spline teeth 318. While not illustrated, the clutch assembly 332 can include additional components such as, but not limited to, an engagement body (e.g., the engagement body 152 of FIG. 2). The clutch plate 335 is moveable between a first position and a second position. Movement of the clutch plate 335 between the first position and the second position causes movement of the clutch assembly 332 between a disengaged position and an engaged position, respectively.

The clutch assembly 332 is similar to the clutch assembly 130 (FIG. 2) in that the clutch assembly 332 includes the clutch plate 335. The clutch plate 335, however, is a single-piece construction. Put another way, the clutch plate 335 includes a singular plate as opposed to two plates (e.g., the rotating plate 138 and the non-rotating plate 136 of FIG. 2). As a non-limiting example, the clutch plate 335 includes only a rotating plate 338. The rotating plate 338 is coupled to the electric machine drive shaft 308 such that the rotating plate 338, and therefore the clutch plate 335, rotates circumferentially with the electric machine drive shaft 308, with respect to the rotational axis 310.

A gap (G) is formed axially between the clutch plate 335 and a respective portion of the set of clutch teeth 334. When the clutch plate 335 is the rotating plate 338, the gap (G) is non-zero in both the first position and the second position. Put another way, when in the second position (clutch assembly 332 is engaged) and the clutch plate 335 is a rotating plate 338, the gap (G) is non-zero such that the clutch plate 335 does not contact the set of clutch teeth 334. Sizing the gap (G) to be non-zero between the first position and the second position is especially important when the clutch plate 335 is the rotating plate 338. Sizing the gap (G) to be non-zero at all times ensures that the rotating plate 338 does not come into contact with and rotate against a respective portion of the set of clutch teeth 334. If the clutch plate 335 were allowed to freely rotate against the set of clutch teeth 334, the set of clutch teeth 334 could wear on the clutch plate 335, or vice versa.

The sizing of the gap (G) is set by one or more portions of the clutch assembly 332. As a non-limiting example, the biasing element 340 can be sized (e.g., a spring constant can be selected) such that the force applied on the clutch plate 335 by the biasing element 340 exceeds an attraction force from a magnetic field generated by the electric machine 300. As such, the biasing element 340 can prevent further axial movement of the clutch plate 335 towards the set of clutch teeth 334. Additionally or alternatively, axial movement of the clutch plate 335 can stop once a respective portion of the clutch assembly 332 (e.g., the engagement body) enters the engaged position.

While described in terms of including the rotating plate 338, it will be appreciated that the clutch plate 335 can be formed only as a non-rotating plate (e.g., the non-rotating plate 136). Additional structure to rotationally isolate the non-rotating plate of the clutch plate 335 from the electric machine drive shaft 308 can be included. As a non-limiting example, a bearing assembly (e.g., the bearing assembly 142 of FIG. 2) can be formed between the clutch plate 335 and the electric machine drive shaft 308. In all cases, axial movement of the clutch plate 335 between the first position and the second position causes the clutch assembly 332 to move axially between the disengaged position and the engaged position, respectively, with respect to the rotational axis 310. If the clutch plate 335 were formed as the non-rotating plate, it will be appreciated that the gap (G) can reach zero as the clutch plate 335 would not rotate against the set of clutch teeth 334.

In relation to the clutch assembly 130, the clutch assembly 332 has a less complex design. Specifically, the clutch plate 335 does not include a two-piece construction like the clutch plate 135 (FIG. 2); thus decreasing an overall complexity of the clutch assembly 332.

Benefits of the present disclosure include the HTS having the electric machine with the clutch assembly with a reduced complexity in comparison to conventional clutch assemblies. Specifically, the conventional clutch assembly includes a clutch actuator in the form of, for example, a motor. The motor is independently operated from the electric machine of the HTS and requires its own power source. The HTS, as described herein, includes the clutch assembly that is movable between the disengaged and engaged position without the clutch actuator. Instead, the clutch assembly utilizes the magnetic flux of the electric machine to move the clutch assembly between the engaged and disengaged positions, thus negating the need for the external clutch actuator.

The elimination of the external clutch actuator reduces the footprint of the clutch assembly in comparison to the clutch assembly if it were formed with the clutch actuator. Reducing the footprint of the clutch assembly, in turn, reduces the size of the HTS, thus allowing for easier packaging of the HTS with the gas turbine engine.

The elimination of the external clutch actuator through use of the automatic movement of the clutch assembly based on the magnetic flux reduces a complexity of the clutch assembly. Specifically, the clutch assembly, as descried herein, is reactionary to the magnetic flux and the threshold value of the magnetic flux. A control system (e.g., a controller module) is not required to send a runtime instruction to the clutch assembly to move between the engaged position and the disengaged position. The use of control systems in clutch assemblies increases the complexity and cost of the clutch assembly in comparison to the clutch assembly described herein.

The clutch assembly, as described herein, effectively uses the magnetic flux that leaks out from the set of windings (hereinafter referred to as "end winding leakage flux"). In conventional electric machines, the end winding leakage flux is not used. Instead, a portion of the overall magnetic flux, defined by the end winding leakage flux, is not used. The electric machine, as descried herein, however, utilizes at least a portion of the end winding leakage flux, which would otherwise not be used. As such, the electric machine, as described herein, has a higher efficiency than the conventional electric machine.

To the extent not already described, the different features and structures of the various embodiments can be used in combination, or in substitution with each other as desired. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:
An electric machine for a gas turbine engine, the electric machine comprising a rotor rotatable about a rotational axis, an electric machine drive shaft rotationally driven by the rotor, a stator having a stator core and a set of windings, the stator core extending axially, with respect to the rotational axis, between a first stator end and a second stator end, and a clutch assembly comprising an engagement body provided with the electric machine drive shaft, the engagement body defining a rotational output of the electric machine, a set of clutch teeth located along the first stator end, and a clutch plate coupled to the electric machine drive shaft , the clutch plate being moveable between an first position defining a disengaged position of the clutch assembly, and a second position defining an engaged position of the clutch assembly where the engagement body transfers a torque from the electric machine drive shaft to an external drive shaft that is exterior the electric machine, with a movement of the clutch plate being based on a magnetic flux generated by the set of windings.

The electric machine of any preceding clause, wherein the clutch assembly further comprises a biasing element configured to bias the clutch plate towards the first position.

The electric machine of any preceding clause, wherein the clutch plate comprises a rotating plate and a non-rotating plate.

The electric machine of any preceding clause, wherein the biasing element extends axially between the rotor and the rotating plate.

The electric machine of any preceding clause, wherein the engagement body comprises a set of engagement teeth configured to catch a respective portion of the external drive shaft.

The electric machine of any preceding clause, wherein each engagement tooth of the set of engagement teeth is defined by a ramped surface extending circumferentially along a respective portion of the engagement body.

The electric machine of any preceding clause, wherein the engagement body is integrally formed with the electric machine drive shaft.

The electric machine of any preceding clause, wherein the engagement body is threaded to the electric machine drive shaft at a threaded region.

The electric machine of any preceding clause, wherein the each engagement tooth of the set of engagement teeth are rectangular.

The electric machine of any preceding clause, wherein the electric machine is included in a hybrid turbine starter (HTS).

The electric machine of any preceding clause, wherein the external drive shaft is a turbine shaft rotationally coupled to a turbine member, and the HTS comprises an output shaft coupled to the turbine shaft.

The electric machine of any preceding clause, wherein the output shaft is coupled to a drive shaft of the gas turbine engine.

The electric machine of any preceding clause, wherein the gas turbine engine comprises a compressor section, a combustion section and a turbine section in serial flow arrangement.

The electric machine of any preceding clause, wherein the drive shaft rotationally couples the turbine section to the compressor section.

The electric machine of any preceding clause, wherein the turbine member and the electric machine are housed within an interior of an integral housing.

The electric machine of any preceding clause, wherein the clutch plate is a two-piece construction having a rotating plate and a non-rotating plate coupled to the rotating plate.

The electric machine of any preceding clause, wherein the clutch assembly comprises a bearing assembly coupling the non-rotating plate to the rotating plate.

The electric machine of any preceding clause, wherein the clutch assembly further comprises a biasing element configured to bias the plate towards the first position.

The electric machine of any preceding clause, wherein the biasing element extends axially between the rotor and the rotating plate.

The electric machine of any preceding clause, wherein the rotating plate is integrally formed with the electric machine drive shaft .

The electric machine of any preceding clause, wherein the bearing assembly is coupled to the non-rotating plate via a key and a slot.

The electric machine of any preceding clause, wherein the bearing assembly includes the key and the rotating plate comprises the slot.

The electric machine of any preceding clause, wherein the bearing assembly rotationally isolates the non-rotating plate from the electric machine drive shaft.

The electric machine of any preceding clause, wherein the clutch plate is a single-piece construction.

The electric machine of any preceding clause, wherein the clutch plate has a rotating plate that rotates circumferentially with the electric machine drive shaft.

The electric machine of any preceding clause, wherein a gap is formed axially between the clutch plate and the set of clutch teeth, with respect to the rotational axis, with the gap being non-zero in both the first position and the second position.

The electric machine of any preceding clause, wherein a shaft lock is formed between the rotor and the electric machine drive shaft.

The electric machine of any preceding clause, wherein the rotor comprises a guide channel and the electric machine drive shaft comprises a plurality of spline teeth received within the guide channel, the guide channel and the plurality of spline teeth collectively forming the shaft lock.

The electric machine of any preceding clause, wherein the plurality of spline teeth are axially moveable within the guide channel.

The electric machine of any preceding clause, wherein the plurality of spline teeth are circumferentially constrained within the guide channel.

The electric machine of any preceding clause, wherein the set of windings comprises a set of end windings, with each end winding of the set of end windings defining an opening, and the set of clutch teeth extend through the openings of the set of end windings.

The electric machine of any preceding clause, wherein the electric machine comprises a set of slots with the set of windings extending through the set of slots, and a total number of clutch teeth of the set of clutch teeth is equal to a total number of slots of the set of slots.

The electric machine of any preceding clause, wherein each clutch tooth of the set of clutch teeth has a base extending a long a respective portion of the first stator end, and a leg extending axially outwardly from the base.

The electric machine of any preceding clause, wherein the leg extends axially beyond a distal end of a nearest end winding of the set of end windings.

The electric machine of any preceding clause, wherein the leg and the base collectively form an L-shaped profile.

The electric machine of any preceding clause, wherein each clutch tooth of the set of clutch teeth comprises a first leg and a second leg extending from radially opposing portions of the base.

The electric machine of any preceding clause, wherein the first leg, the second leg and the base collectively forming a U- shaped profile.

The electric machine of any preceding clause, wherein the first leg, the second leg and the base collectively forming a C-shaped profile.

The electric machine of any preceding clause, wherein the clutch plate includes a first ferrous material and the set of clutch teeth comprise a second ferrous material.

The electric machine of any preceding clause, wherein the first ferrous material and the second ferrous material are each the same magnetic material.

A clutch assembly for an electric machine having a rotor rotatable about a rotational axis, an electric machine drive shaft rotationally driven by the rotor, and a stator extending between a first stator end and a second stator end, the electric machine being used with a turbine engine, the clutch assembly comprising an engagement body provided with the electric machine drive shaft , the engagement body defining a rotational output of the electric machine, a set of clutch teeth located along the first stator end, and a clutch plate coupled to the electric machine drive shaft, the clutch plate being moveable between an first position defining a disengaged position of the clutch assembly, and a second position defining an engaged position of the clutch assembly where the engagement body transfers a torque from the electric machine drive shaft to an external drive shaft that is exterior the electric machine, with a movement of the clutch plate being based on a magnetic flux generated by the set of windings.

The clutch assembly of any preceding clause, wherein the clutch assembly further comprises a biasing element configured to bias the clutch plate towards the first position.

The clutch assembly of any preceding clause, wherein the clutch plate comprises a rotating plate and a non-rotating plate.

The clutch assembly of any preceding clause, wherein the biasing element extends axially between the rotor and the rotating plate.

The clutch assembly of any preceding clause, wherein the engagement body comprises a set of engagement teeth configured to catch a respective portion of the external drive shaft.

The clutch assembly of any preceding clause, wherein each engagement tooth of the set of engagement teeth is defined by a ramped surface extending circumferentially along a respective portion of the engagement body.

The clutch assembly of any preceding clause, wherein the engagement body is integrally formed with the electric machine drive shaft.

The clutch assembly of any preceding clause, wherein the engagement body is threaded to the electric machine drive shaft at a threaded region.

The clutch assembly of any preceding clause, wherein the each engagement tooth of the set of engagement teeth are rectangular.

The clutch assembly of any preceding clause, wherein the electric machine is included in a hybrid turbine starter.

The clutch assembly of any preceding clause, wherein the external drive shaft is a turbine shaft rotationally coupled to a turbine member.

The clutch assembly of any preceding clause, wherein the output shaft is coupled to a drive shaft of a gas turbine engine.

The clutch assembly of any preceding clause, wherein the gas turbine engine comprises a compressor section, a combustion section and a turbine section in serial flow arrangement.

The clutch assembly of any preceding clause, wherein the drive shaft rotationally couples the turbine section to the compressor section.

The clutch assembly of any preceding clause, wherein the turbine member and the electric machine are housed within an interior of an integral housing.

The clutch assembly of any preceding clause, wherein the clutch plate is a two-piece construction having a rotating plate and a non-rotating plate coupled to the rotating plate.

The clutch assembly of any preceding clause, wherein the clutch assembly comprises a bearing assembly coupling the non-rotating plate to the rotating plate.

The clutch assembly of any preceding clause, wherein the clutch assembly further comprises a biasing element configured to bias the plate towards the first position.

The clutch assembly of any preceding clause, wherein the biasing element extends axially between the rotor and the rotating plate.

The clutch assembly of any preceding clause, wherein the rotating plate is integrally formed with the electric machine drive shaft .

The clutch assembly of any preceding clause, wherein the bearing assembly is coupled to the non-rotating plate via a key and a slot.

The clutch assembly of any preceding clause, wherein the bearing assembly includes the key and the rotating plate comprises the slot.

The clutch assembly of any preceding clause, wherein the bearing assembly rotationally isolates the non-rotating plate from the electric machine drive shaft.

The clutch assembly of any preceding clause, wherein the clutch plate is a single-piece construction.

The clutch assembly of any preceding clause, wherein the clutch plate has a rotating plate that rotates circumferentially with the electric machine drive shaft.

The clutch assembly of any preceding clause, wherein a gap is formed axially between the clutch plate and the set of clutch teeth, with respect to the rotational axis, with the gap being non-zero in both the first position and the second position.

The clutch assembly of any preceding clause, wherein a shaft lock is formed between the rotor and the electric machine drive shaft.

The clutch assembly of any preceding clause, wherein the rotor comprises a guide channel and the electric machine drive shaft comprises a plurality of spline teeth received within the guide channel, the guide channel and the plurality of spline teeth collectively forming the shaft lock.

The clutch assembly of any preceding clause, wherein the plurality of spline teeth are axially moveable within the guide channel.

The clutch assembly of any preceding clause, wherein the plurality of spline teeth are circumferentially constrained within the guide channel.

The clutch assembly of any preceding clause, wherein the set of windings comprises a set of end windings, with each end winding of the set of end windings defining an opening, and the set of clutch teeth extend through the openings of the set of end windings.

The clutch assembly of any preceding clause, wherein the electric machine comprises a set of slots with the set of windings extending through the set of slots, and a total number of clutch teeth of the set of clutch teeth is equal to a total number of slots of the set of slots.

The clutch assembly of any preceding clause, wherein each clutch tooth of the set of clutch teeth has a base extending a long a respective portion of the first stator end, and a leg extending axially outwardly from the base.

The clutch assembly of any preceding clause, wherein the leg extends axially beyond a distal end of a nearest end winding of the set of end windings.

The clutch assembly of any preceding clause, wherein the leg and the base collectively form an L-shaped profile.

The clutch assembly of any preceding clause, wherein each clutch tooth of the set of clutch teeth comprises a first leg and a second leg extending from radially opposing portions of the base.

The clutch assembly of any preceding clause, wherein the first leg, the second leg and the base collectively forming a U- shaped profile.

The clutch assembly of any preceding clause, wherein the first leg, the second leg and the base collectively forming a C-shaped profile.

The clutch assembly of any preceding clause, wherein the clutch plate includes a first ferrous material and the set of clutch teeth comprise a second ferrous material.

The clutch assembly of any preceding clause, wherein the first ferrous material and the second ferrous material are each the same magnetic material.

The clutch assembly of any preceding clause, wherein the engagement body configured to transfer a torque from the electric machine drive shaft to the external drive shaft located exterior the electric machine.

The clutch assembly of any preceding clause, wherein the electric machine is included in a hybrid turbine starter.

## Claims

1. An electric machine (100, 300) for a gas turbine engine (14), the electric machine (100, 300) comprising:
a rotor (104, 304) rotatable about a rotational axis (110, 310);
an electric machine drive shaft (108, 308) rotationally driven by the rotor (104, 304);
a stator (102, 302) having a stator core (120, 320) and a set of windings (128, 328), the stator core (120, 320) extending axially, with respect to the rotational axis (110, 310), between a first stator end (122, 322) and a second stator end (124); and
a clutch assembly (132, 332) comprising:
an engagement body (152) provided with the electric machine drive shaft (108, 308), the engagement body (152) defining a rotational output of the electric machine (100, 300);
a set of clutch teeth (134, 334) located along the first stator end (122, 322); and
a clutch plate (135, 335, 136, 138, 338) coupled to the electric machine drive shaft (108, 308), the clutch plate (135, 335, 136, 138, 338) being moveable between a first position defining a disengaged position of the clutch assembly (132, 332), and a second position defining an engaged position of the clutch assembly (132, 332) where the engagement body (152) transfers a torque from the electric machine drive shaft (108, 308) to an external drive shaft that is exterior the electric machine (100, 300), with a movement of the clutch plate (135, 335, 136, 138, 338) being based on a magnetic flux generated by the set of windings (128, 328).

2. The electric machine (100, 300) of claim 1, wherein the clutch assembly (132, 332) further comprises a biasing element (140, 340) configured to bias the clutch plate (135, 335, 136, 138, 338) towards the first position.

3. The electric machine (100, 300) of any of claims 1-2, wherein the engagement body (152) comprises a set of engagement teeth (172) configured to catch a respective portion of the external drive shaft.

4. The electric machine (100, 300) of any of claims 1-3, wherein the electric machine (100, 300) is included in a hybrid turbine starter (HTS) (10, 210).

5. The electric machine (100, 300) of claim 4, wherein the external drive shaft is a turbine shaft (40) rotationally coupled to a turbine member (38), and the HTS (10, 210) comprises an output shaft (78) coupled to the turbine shaft (40).

6. The electric machine (100, 300) of any of claims 1-5, wherein the clutch plate (135, 335, 136, 138, 338) is a two-piece construction having a rotating plate (138, 338) and a non-rotating plate (136) coupled to the rotating plate (138, 338).

7. The electric machine (100, 300) of claim 6, wherein the clutch assembly (132, 332) comprises a bearing assembly (142) coupling the non-rotating plate (136) to the rotating plate (138, 338).

8. The electric machine (100, 300) of any of claims 1-7, wherein the clutch plate (135, 335, 136, 138, 338) is a single-piece construction.

9. The electric machine (100, 300) of claim 8, wherein a gap (G) is formed axially between the clutch plate (135, 335, 136, 138, 338) and the set of clutch teeth (134, 334), with respect to the rotational axis (110, 310), with the gap (G) being non-zero in both the first position and the second position.

10. The electric machine (100, 300) of any of claims 1-9, wherein a shaft lock (116, 316) is formed between the rotor (104, 304) and the electric machine drive shaft (108, 308).

11. The electric machine (100, 300) of claim 10, wherein the rotor (104, 304) comprises a guide channel (182) and the electric machine drive shaft (108, 308) comprises a plurality of spline teeth (118, 318, 184, 186) received within the guide channel (182), the guide channel (182) and the plurality of spline teeth (118, 318, 184, 186) collectively forming the shaft lock (116, 316).

12. The electric machine (100, 300) of claim 11, wherein the plurality of spline teeth (118, 318, 184, 186) are axially moveable within the guide channel (182).

13. The electric machine (100, 300) of any of claims 1-12, wherein:
the set of windings (128, 328) comprises a set of end windings (162), with each end winding of the set of end windings (162) defining an opening (176); and
the set of clutch teeth (134, 334) extend through the opening (176)s of the set of end windings (162).

14. The electric machine (100, 300) of any of claims 1-13, wherein each clutch tooth of the set of clutch teeth (134, 334) has a base (168) extending a long a respective portion of the first stator end (122, 322), and a leg (164, 166) extending axially outwardly from the base (168).

15. The electric machine (100, 300) of any of claims 1-14, wherein the clutch plate (135, 335, 136, 138, 338) includes a first ferrous material and the set of clutch teeth (134, 334) comprise a second ferrous material.
